# EUROPÄISCHE PATENTSCHRIFT

(11) **EP 3 339 803 B1**
(45) Veröffentlichungstag und Bekanntmachung des Hinweises auf die Patenterteilung: **12.05.2021**
(21) Anmeldenummer: 16206368.9
(22) Anmeldetag: 22.12.2016
(51) Int. Cl.: G01C 15/00

(54) **KOORDINATENMESSGERÄT MIT AUTOMATISCHER ZIELOBJEKTERKENNUNG**
COORDINATE MEASURING DEVICE WITH AUTOMATED TARGET DETECTION
APPAREIL DE MESURE DE COORDONNÉES DOTÉ D'UNE RECONNAISSANCE D'OBJET CIBLE AUTOMATIQUE

(43) Veröffentlichungstag der Anmeldung: 27.06.2018
(60) Teilanmeldung: 21158747.2
(73) Patentinhaber: Leica Geosystems AG, 9435 Heerbrugg (CH)
(72) Erfinder: LÜTHI, Thomas, 5000 Aarau (CH); STEGER, Roger, 5620 Bremgarten (CH)
(74) Vertreter: Kaminski Harmann

(56) Entgegenhaltungen:
- EP-A2- 2 068 117
- WO-A1-01/04575
- WO-A1-2007/079601
- WO-A1-2012/141810
- DE-A1-102010 024 014
- DE-A1-102012 221 760
- US-A1- 2007 267 498

## Beschreibung

Die vorliegende Erfindung betrifft ein Koordinatenmessgerät zum Erfassen einer Position eines im Raum bewegbaren, einen Retroreflektor aufweisenden Zielobjekts, wobei eine automatische Identifizierung eines erfassten Zielobjekts und eine Zuordnung von mit dem Zielobjekt assoziierten Spezifikationen erfolgt.

Koordinatenmessgeräte, die für eine fortlaufende Verfolgung eines Zielpunkts und eine koordinative Positionsbestimmung dieses Punkts ausgebildet sind, können allgemein, insbesondere im Zusammenhang mit der industriellen Vermessung, unter dem Begriff Lasertracker zusammengefasst werden. Ein Zielpunkt kann dabei durch eine retro-reflektierende Einheit (z. B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z. B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z. B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z. B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Zur Entfernungsmessung weisen Lasertracker des Standes der Technik zumindest einen Distanzmesser auf, wobei dieser z. B. als Interferometer (IFM) ausgebildet sein kann. Da solche Entfernungsmesseinheiten nur relative Distanzänderungen messen können, werden in heutigen Lasertrackern zusätzlich zu Interferometern sogenannte Absolutdistanzmesser (ADM) verbaut. Beispielsweise ist eine derartige Kombination von Messmitteln zur Entfernungsbestimmung durch das Produkt AT901 der Leica Geosystems AG bekannt. Eine Kombination eines Absolutdistanzmessers und eines Interferometers zur Entfernungsbestimmung mit einem HeNe-Laser ist beispielsweise aus der WO 2007/079600 A1 bekannt.

Ausserdem wird in modernen Trackersystemen - zunehmend standardisiert - auf einem Sensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Lasertracker nach dem Stand der Technik weisen für eine fortlaufende Zielverfolgung regelmässig einen Tracking-Flächensensor in Form eines positionssensitiven Detektors (PSD) auf, wobei am Ziel reflektierte Messlaserstrahlung auf diesem detektiert werden kann. Als PSD ist in diesem Zusammenhang ein örtlich analog arbeitender Flächensensor zu verstehen, mit welchem ein Schwerpunkt einer Lichtverteilung auf der Sensorfläche bestimmt werden kann. Das Ausgangssignal des Sensors wird dabei vermittels einer oder mehrerer photosensitiver Flächen erzeugt und hängt von der jeweiligen Position des Licht-Schwerpunkts ab. Mittels einer nachgeschalteten oder integrierten Elektronik kann das Ausgangssignal ausgewertet werden und der Schwerpunkt ermittelt werden. Die Ermittlung der Position des Schwerpunkts des auftreffenden Lichtpunkts kann dabei sehr schnell und mit einer sehr hohen Auflösung erfolgen. Allerdings kann mittels der PSD nur ein Schwerpunkt der Lichtverteilung ermittelt werden, und keine Verteilung mehrerer Lichtpunkte.

Mittels dieser PSD kann eine Ablage des Auftreffpunkts des erfassten Strahls von einem Servokontroll-Nullpunkt bestimmt und auf Basis der Ablage ein Nachführen des Laserstahls auf das Ziel erfolgen. Zu diesem Zweck und zum Erreichen einer hohen Genauigkeit ist das Sichtfeld dieser PSD vergleichsweise klein, d. h. korrespondierend zum Strahldurchmesser des Messlaserstrahls, gewählt.

Eine Erfassung mit der PSD erfolgt koaxial zur Messachse, sodass die Erfassungsrichtung der PSD der Messrichtung entspricht. Die Anwendung des PSD-basierten Trackings und der Feinanzielung kann erst erfolgen, nachdem der Messlaser auf ein retro-reflektierendes Ziel ausgerichtet worden ist.

Der beschriebenen Zielverfolgung muss ein Ankoppeln des Laserstrahls an den Reflektor vorausgehen. Hierzu kann am Tracker zusätzlich eine Erfassungseinheit mit einem weiteren positionssensitiven Sensor (PSD) mit einem verhältnismässig grossen Sichtfeld angeordnet sein. Zudem sind in gattungsgemässen Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder komplett zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 A1 bekannt.

Gängige Lasertracker weisen inzwischen standardmässig eine automatische Zielerfassungs- und Zielverfolgungs-Funktion für als Ziel-Reflektor dienende Prismen auf (ATR: "Automatic Target Recognition"). Dafür sind im Lasertracker gängigerweise eine separate ATR-Lichtquelle - z.B. ein Multimodefaserausgang, die optische Strahlung mit einer Wellenlänge im Bereich von 850 nm emittiert - und ein spezieller, für diese Wellenlänge sensitiver ATR-Detektor (z.B. CCD-Flächensensor) integriert. Zur Sicherstellung des Funktionierens der automatischen Anzielung basierend auf Auswertung der Position des Reflexflecks des am Prisma retro-reflektierten ATR-Messstrahls auf dem ATR-Flächensensor ist es typischerweise erforderlich, vor Funktionsstart die Anzieleinrichtung zumindest derart ungefähr auf den Ziel-Reflektor auszurichten, dass der retro-reflektierte ATR-Messstrahl auch auf dem ATR-Flächensensor auftrifft. Dafür kann z.B. zuvor eine manuelle Anzielung des Ziel-Reflektors basierend auf Augenmass erfolgen oder eine automatische Grobanzielfunktion ausgeführt werden.

Das manuelle, grobe Anvisieren des Zielobjekts kann benutzerseitig zum einen erfolgen, indem das Zielobjekt auf einem Benutzerdisplay der Anzeige-Steuereinheit direkt am Koordinatenmessgerät oder auf dem Display eines separaten Peripheriegerätes (z.B. Datenlogger als Fernsteuerung) betrachtet und angezielt wird. Oft erfolgt dies jedoch nach wie vor mittels Betrachten des Ziels durch ein Okular eines Zielfernrohrs (d.h. der Anzieleinrichtung), da im praktischen Einsatz - z.B. bei Sonneneinstrahlung - ein angezeigtes Display-Bild auf der Anzeige-Steuereinheit bzw. dem Datenlogger ungenügend erkennbar sein kann.

Probleme mit der automatischen Zielerfassungs- und Zielverfolgungs-Funktion können auftreten, wenn sich das Ziel derart ruckartig und schnell bewegt, dass es aus dem Sichtbereich des ATR-Detektors verschwindet (d.h. keine am Ziel reflektierte ATR-Messstrahlung mehr auf dem ATR-Flächensensor auftrifft). Um auch bei schnellen und ruckartigen Bewegungen das Ziel im "gekoppelten" Zustand zu halten und nicht zu aus dem Sichtbereich des ATR-Detektors zu verlieren, kann beispielsweise eine weitere (im sichtbaren Wellenlängenbereich sensitive) Kamera Bilder des Ziels aufnehmen und anhand von Bildverarbeitung Bewegungen des Ziels (bzw. Bewegungen von sich zusammen mit dem Ziel mitbewegenden Objekten) verfolgen, und dadurch im Falle eines Verlierens des Ziels aus dem "gekoppelten" Zustand das Wiederauffinden und Wiederankoppeln des RetroReflektors erleichtern. Ein solches System wird z.B. in der EP 2 141 450 beschrieben.

Lasertracker messen auf Retroreflektoren, z.B. Hollow corner (CCR, mit 1.5", 7/8", 0.5" Durchmesser der Stahlkugel), Tripelprismen, N2 (Etalon) oder CatEye-Reflektoren. Dabei ist die Kenntnis des Reflektortyps erforderlich, da einerseits die Position der Würfelecke (im Kugelzentrum) gemessen und das Werkstück mit der Oberfläche der Kugel berührt wird und andererseits einige Reflektortypen (Tripelprismen/Cateye) eine von Null abweichende Additionskonstante haben. Insbesondere bei Kompensationsmessungen ist es wichtig, dass der richtige Reflektortyp verwendet wird.

Lasertracker aus dem Stand der Technik haben den Nachteil, dass der verwendete Reflektor jeweils manuell in der Software eingegeben werden muss, was z.B. bei Messungen über grössere Distanzen oder auf mehrere unterschiedliche Zielobjekte, einen beträchtlichen Arbeits- und Zeitaufwand bedeutet, z.B. wenn noch nicht korrekt erfasste Zielobjekte erst manuell verifiziert werden müssen.

Ein wesentlicher Nachteil von herkömmlichen Lasertrackern und Zielobjekten ist insbesondere eine ungenügende Robustheit gegen eine falsche Identifikation des Zielobjekts (z.B. des Reflektor-Typs), beispielsweise im Fall von mehreren sich im Sichtfeld befindenden Zielobjekten. Zudem erweist sich bei einigen bekannten Lasertrackern des Standes der Technik das aufwendige Übermitteln der Zielobjekt-Identitäten von den jeweiligen Zielobjekten an den Lasertracker als nachteilig. Die DE 10 2010 024 014 A1 beschreibt ein Zielobjekt, welches mit mehreren Unterzielen (Kennelementen) versehen ist, wobei sich die Unterziele in ihrer Intensität und/oder Grösse unterscheiden. Hierdurch können mehrere Ziele unterscheidbar gemacht werden Das Dokument beschreibt auch ein Koordinatenmessgerät.

Es ist deshalb eine Aufgabe der Erfindung, ein robusteres und weniger fehleranfälliges Koordinatenmesssystem zur Verfügung zu stellen.

Eine weitere Aufgabe der Erfindung liegt zudem darin, ein Koordinatenmessgerät für eine effizientere und vereinfachte Koordinatenvermessung zur Verfügung zu stellen.

Diese Aufgaben werden durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Koordinatenmessgerät, insbesondere Lasertracker, zum Erfassen einer Position eines im Raum bewegbaren, einen Retroreflektor aufweisenden Zielobjekts, wobei das Koordinatenmessgerät mindestens aufweist eine Strahlungsquelle zur Emission eines optischen Messstrahls, wobei der Messstrahl mittels einer Strahllenkeinheit in eine definierte Raumrichtung emittiert wird und dadurch eine Zielachse definiert, eine Entfernungsmessfunktionalität zur Bestimmung einer Distanz zum Zielobjekt mittels des Messstrahls, eine Winkelmessfunktionalität zur Bestimmung einer Emissionsrichtung des Messstrahls, eine Zielverfolgungsfunktionalität zur fortlaufenden Verfolgung des Zielobjekts, und eine Auswerte- und Steuereinheit zur Datenspeicherung und Steuerung des Koordinatenmessgeräts. Als Strahlungsquelle kann insbesondere eine HeNe-Laserlichtquelle oder eine Laserdiodenquelle verwendet werden. Der Messstrahl kann für verschiedene Funktionalitäten genutzt werden und beispielsweise auch aus einer koaxialen oder parallelen Kombination mehrerer Komponenten (Einzelstrahlen) bestehen, beispielsweise aus einem infraroten Lasermessstrahl für die Entfernungs- und Winkelmesseinheit, einem (visuellen) Pointingstrahl, z.B. als visuelle Unterstützung für einen Operator, und einer separaten Zielverfolgungskomponente.

Die Entfernungsmesseinheit ist typischerweise als Laserdistanzmesser ausgebildet, z.B. mittels Laufzeit- oder Phasendifferenzmessung oder mittels des Fizeau-Prinzips. Insbesondere kann die Entfernungsmesseinheit auch als Absolutdistanzmesser ausgebildet sein. Beispielsweise sind derartige Distanzmesser durch das Produkt AT901 der Leica Geosystems AG bekannt und eine Kombination eines Absolutdistanzmessers und eines Interferometers zur Entfernungsbestimmung mit einem HeNe-Laser ist beispielsweise aus der WO 2007/079600 A1 bekannt.

Der Messstrahl wird an einem Zielobjekt reflektiert, wobei der reflektierte Strahl mit einer Erfassungseinheit des Koordinatenmessgeräts erfasst wird. Hierbei wird eine Emissions- bzw. Empfangsrichtung des Strahls ermittelt, beispielsweise mittels Sensoren zur Winkelmessung, insbesondere Winkelencodern.

Beispielsweise kann der Messstrahl im Rahmen einer, im Speziellen automatischen, Zielerfassungsfunktionalität an einen Retroreflektor eines Zielobjekts angekoppelt werden. Hierzu kann zum Beispiel eine separate (zweckbestimmte) Zielerfassungskamera, beispielsweise mit einem positionssensitiven Sensor mit einem verhältnismässig grossen Sichtfeld oder ein eingangs erwähnter ATR-Detektor, verwendet werden. Zudem sind in gattungsgemässe Geräte oft zusätzliche Beleuchtungsmittel integriert, insbesondere zur Erzeugung einer Erfassungsstrahlung mit einer definierten, sich von der Wellenlänge der Distanzmessmittel unterscheidenden Wellenlänge. Der Sensor kann in diesem Zusammenhang sensitiv auf einen Bereich um diese bestimmte Wellenlänge ausgebildet sein, um beispielsweise Fremdlichteinflüsse zu reduzieren oder komplett zu verhindern.

Im Rahmen der Zielverfolgungsfunktionalität wird - in modernen Systemen zunehmend standardisiert - auf einem Sensor beispielsweise eine Ablage des empfangenen Strahls von einer Nullposition ermittelt. Mittels dieser so messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung eines Reflektorzentrums ausgerichtet ist. Durch das Nachführen der Laserstrahlausrichtung kann eine fortlaufende Zielverfolgung (Tracking) des Zielobjekts erfolgen und die Entfernung und Position des Zielobjekts fortlaufend relativ zum Koordinatenmessgerät bestimmt werden. Das Nachführen kann dabei mittels einer Ausrichtungsänderung eines motorisiert bewegbaren, zur Ablenkung des Laserstrahls vorgesehenen Ablenkspiegels und/oder durch ein Schwenken einer Anzieleinheit, die die strahlführende Laseroptik aufweist, realisiert werden.

Insbesondere können die Zielerfassungsfunktionalität, die Zielverfolgungsfunktionalität und die Entfernungs- und Winkelmessfunktionalität beispielsweise durch jeweils separate zweckbestimmte Detektoren und/oder Kameras mit entsprechender Kameraoptik bereitgestellt werden oder ein oder mehrere Detektoren und/oder Kameras können derart ausgebildet und verwendet werden, dass damit mehrere der obigen Funktionalitäten durchführbar sind.

Die Auswerte- und Steuereinheit erfasst und verarbeitet die Messwerte verschiedener Sensoren, beispielsweise einer Distanzmessvorrichtung, Winkelencoder zur Bestimmung einer relativen oder absoluten Achslage, und steuert Achslagemotoren zur Ausrichtung der Strahllenkeinheit.

Das Koordinatenmessgerät weist ferner eine Zielobjekt-Datenbasis auf, gespeichert auf der Auswerte- und Steuereinheit, welche Informationen für einen Satz von einzelnen Zielobjekten bereitstellt, mindestens umfassend jeweils den einzelnen Zielobjekten zugeordnete Spezifikationen, und jeweils den einzelnen Zielobjekten zugeordnete Werte von Unterscheidungsparametern, wobei die Unterscheidungsparameter mindestens ein Element der folgenden Gruppe umfassen ein Parameter der für ein totales Retroreflektiervermögen eines Zielobjekts steht, insbesondere ein Verhältnis von auf das Zielobjekt auftreffender Strahlung zum am jeweiligen Zielobjekt retroreflektierten Anteil der auftreffenden Strahlung, und ein Parameter der für eine Aperturgrösse des Retroreflektors eines Zielobjekts steht, insbesondere ein Durchmesser oder eine Fläche einer mit einem Flächendetektor erfassten Aufnahme des Retroreflektors des jeweiligen Zielobjekts aus einer definierten Distanz.

Gemäss der vorliegenden Erfindung wird im Rahmen einer Identifikationsfunktionalität automatisch gesteuert durch die Auswerte- und Steuereinheit für ein zu identifizierendes Zielobjekt mindestens ein Identifikationselement der folgenden Gruppe bestimmt: ein Wert des mit einem Intensitätsdetektor erfassten Intensitätssignals des Zielobjekts, ein Durchmesser oder eine Fläche einer mit einem Flächendetektor erfassten Aufnahme des Zielobjekts; wobei eine automatische Identifizierung des Zielobjekts erfolgt, basierend auf dem bestimmten Identifikationselement, insbesondere wobei für die Identifizierung das Identifikationselement in Relation zu einer mit der Entfernungsmessfunktionalität bestimmten Distanz zum Zielobjekt gesetzt wird, und eine Zuordnung der zugehörigen Spezifikationen zum Zielobjekt erfolgt, basierend auf den durch die Zielobjekt-Datenbasis bereitgestellten Informationen.

In einer Ausführungsform umfasst die Entfernungsmessfunktionalität eine Absolutdistanzmesseinheit und die Identifizierung des Zielobjekts erfolgt basierend auf einer mit der Absolutdistanzmesseinheit gemessenen Entfernung zum Zielobjekt.

Insbesondere für einen Lasertracker mit einer absoluten Distanzmessung ist die Genauigkeit der Distanzmessung davon abhängig, dass die Distanzmessung auf einem ausreichend stabilen Clocksignal (Treiber-Clock) mit einer bekannten Referenz-Frequenz basiert. Die Referenz-Frequenz (beziehungsweise der Treiber-Clock) muss deshalb typischerweise periodisch, beispielsweise in vordefinierten Service-Intervallen, überprüft und gegebenenfalls angepasst werden. Diese Prüfung erfolgt typischerweise mit entsprechenden Messmitteln, z.B. basierend auf einem Rubidium-Frequenznormal, wofür oft eine für den Service zugängliche Schnittstelle am Lasertracker oder dem Distanzmessmodul des Lasertrackers vorgesehen ist, zum Beispiel für eine elektrische Kopplung einer Prüfvorrichtung mit dem Lasertracker, z.B. über einen HF-Stecker.

Nachteilig dabei ist jedoch oft, dass für die Übertragung von (elektronischen) Prüfsignalen, beispielsweise von mehreren zu kontrollierenden Signalen von der Prüfeinrichtung auf den Lasertracker, gegebenenfalls eine (oder mehrere) aufwendige Schnittstelle am Lasertracker erforderlich ist, was beispielsweise einen zusätzlichen Aufwand hinsichtlich Hardware, Elektronik und entsprechend auch hohe Kosten verursacht. Oft wird dadurch beispielsweise eine Prüfung des Treiber-Clocks mit sehr hohen Frequenzen (z.B. im GHz-Bereich) erschwert.

Es ist deshalb ein Bedürfnis, ein verbessertes Kalibrationsverfahren für einen Treiber-Clock bereitzustellen, insbesondere für die Verwendung in einem Absolutdistanzmessmodul, im Speziellen in einem Lasertracker.

Gemäss einer Möglichkeit wird das zu kalibrierende Treiber-Clocksignal auf einen optischen Strahl des Systems, hier des Lasertrackers, aufmoduliert, insbesondere einen bereits vorhanden optischen Strahl, beispielsweise bereitgestellt durch ein entsprechend ausgebildetes Distanzmessmodul. Prinzipiell kann dazu jede Art Modulation eingesetzt werden, beispielsweise eine Amplitudenmodulation. Die Signalquelle kann insbesondere konfigurierbar sein und eine Ausgabe von mehreren zu kontrollierenden Signalen ermöglichen und bei Bedarf komplett ausgeschaltet werden.

Dieser Ansatz ermöglicht eine einfach zugängliche, kontaktlose Messung des Treiber-Clocks, respektive der Referenzfrequenz, mittels einer Empfangseinheit einer vergleichsweise einfachen Prüfvorrichtung, beispielsweise mittels eines Lichtdetektors. Da optische Strahlung als Signalträger eingesetzt wird, ist zudem insbesondere eine Ausgabe von sehr hohen Frequenzen (∼GHz) auch ohne aufwendige Schnittstellen möglich.

Eine weitere Ausführungsform ist dadurch gekennzeichnet, dass der Intensitätsdetektor in mindestens einer der folgenden Funktionen verwendet wird: als zweckbestimmter Identifikationsdetektor des Koordinatenmessgeräts, als Empfänger der Entfernungsmessfunktionalität, insbesondere wobei der Intensitätsdetektor im Rahmen von mindestens einer der folgenden Entfernungsmess-Einheiten verwendet wird: einer Einheit zur Laufzeitmessung, einer Interferometer-Einheit, einer WFD-Einheit, einer FMCW-Einheit, einer Frequency-Comb-Einheit, einer Phasendistanzmess-Einheit, und einer Fizeau-Absolutdistanzmesseinheit, als Trackingdetektor der Zielverfolgungsfunktionalität, insbesondere ausgebildet als positionssensitiver Detektor (PSD), als Zielerfassungsdetektor einer Zielerfassungsfunktionalität des Koordinatenmessgeräts zur Ausrichtung des Messstrahls auf das Zielobjekt, als Zielerfassungsdetektor einer Stereo-Zielerfassungsfunktionalität des Koordinatenmessgeräts zur Ausrichtung des Messstrahls auf das Zielobjekt und zur Bestimmung einer Distanz zum Zielobjekt.

Der Flächendetektor kann in mindestens einer der folgenden Funktionen verwendet werden: als zweckbestimmter Identifikationsdetektor des Koordinatenmessgeräts, als Trackingdetektor der Zielverfolgungsfunktionalität, insbesondere ausgebildet als positionssensitive CCD- oder CMOS-Kamera, als Zielerfassungsdetektor einer Zielerfassungsfunktionalität des Koordinatenmessgeräts zur Ausrichtung des Messstrahls auf das Zielobjekt, als Zielerfassungsdetektor einer Stereo-Zielerfassungsfunktionalität des Koordinatenmessgeräts zur Ausrichtung des Messstrahls auf das Zielobjekt und zur Bestimmung einer Distanz zum Zielobjekt, als Kamera zur Bereitstellung eines Übersichts-Bildes für einen Benutzer.

Da die gemessene Intensität eines mit dem Messstrahl oder beispielsweise mit einer zweckbestimmten Trackingbeleuchtung angestrahlten Zielobjekts hauptsächlich vom Typ des Zielobjekts - Apertur, Baugrösse, Bauform, etc. - und der Distanz zum Zielobjekt abhängt, kann bei vorgängiger Kenntnis über das erfasste Zielobjekt im Rahmen der automatischen Identifizierung des Zielobjekts anhand der Intensitäts- und gegebenenfalls der Entfernungsinformation ein Zustand des Zielobjekts abgeleitet werden, beispielsweise ein Defekt des Zielobjekts oder ein Verschmutzungsgrad.

Eine weitere spezielle Ausführungsform ist dadurch gekennzeichnet, dass die Identifikation im Rahmen des automatischen Identifizierens des Zielobjekts einen ersten Vergleichsparameter definiert, eine weitere auf einer alternativen Methode basierende Identifikation des Zielobjekts erfolgt, insbesondere eine alternative manuelle oder automatische Methode, beispielsweise wobei ein Benutzer über ein Eingabemodul der Auswerte- und Steuereinheit manuell den erwarteten Typ des Zielobjekts und zugehörige Zustandsdaten eingibt, wobei die weitere Identifikation einen zweiten Vergleichsparameter definiert, und ein Abgleich, insbesondere ein automatischer Abgleich durch die Auswerte- und Steuereinheit, des ersten Vergleichsparameters mit dem zweiten Vergleichsparameter erfolgt und aus dem Abgleich ein Zustand des Zielobjekts abgeleitet wird, insbesondere ein Defekt oder ein Verschmutzungsgrad des Zielobjekts.

Der Zustand des Zielobjekts kann dann beispielsweise einem Benutzer sichtbar gemacht werden und gegebenenfalls im Rahmen der Koordinatenmessung berücksichtigt werden.

Ein weiterer Aspekt der Erfindung bezieht sich auf ein Koordinatenmessgerät, insbesondere Lasertracker, zum Erfassen einer Position eines im Raum bewegbaren, einen Retroreflektor aufweisenden Zielobjekts, wobei das Koordinatenmessgerät mindestens aufweist eine Strahlungsquelle zur Emission eines optischen Messstrahls, wobei der Messstrahl mittels einer Strahllenkeinheit in eine definierte Raumrichtung emittiert wird und dadurch eine Zielachse definiert, eine Entfernungsmessfunktionalität zur Bestimmung einer Distanz zum Zielobjekt mittels des Messstrahls, eine Winkelmessfunktionalität zur Bestimmung einer Emissionsrichtung des Messstrahls, eine Zielverfolgungsfunktionalität zur fortlaufenden Verfolgung des Zielobjekts, und eine Auswerte- und Steuereinheit zur Datenspeicherung und Steuerung des Koordinatenmessgeräts.

Das Koordinatengerät umfasst ferner Beleuchtungsmittel zur Beleuchtung des Zielobjekts mit einer Identifikationsstrahlung in einem definierten Wellenlängenbereich, insbesondere ausgebildet als LED, eine Kamera, nachfolgend ID-Kamera genannt, welche mindestens für einen Teilbereich des Wellenlängenbereichs der Identifikationsstrahlung empfindlich ist, insbesondere basierend auf einem CCD- oder CMOS-Sensor, und eine Zielobjekt-Datenbasis, gespeichert auf der Auswerte- und Steuereinheit, welche Informationen für einen Satz von einzelnen Zielobjekten bereitstellt, mindestens umfassend jeweils den einzelnen Zielobjekten zugeordnete Spezifikationen, jeweils den einzelnen Zielobjekten zugeordnete Positionen oder Ablagen zur Zielachse in einer Aufnahme durch die ID-Kamera des einzelnen mit den Beleuchtungsmitteln angestrahlten Zielobjekts, abhängig von einer Distanz zwischen dem Koordinatenmessgerät und dem einzelnen Zielobjekt, einem lateralen Durchmesser des Retroreflektors des einzelnen Zielobjekts, und einem lateralen Abstand zwischen einer optischen Achse der Beleuchtungsmittel und einer optischen Achse der ID-Kamera.

Gemäss der vorliegenden Erfindung wird dabei im Rahmen einer Identifikationsfunktionalität für das zu identifizierende Zielobjekt das Zielobjekt bezüglich der Zielachse erfasst, wobei automatisch gesteuert durch die Auswerte- und Steuereinheit mittels der Entfernungsmessfunktionalität eine Bestimmung einer Distanz zwischen dem Koordinatenmessgerät und dem Zielobjekt erfolgt, eine Bestimmung einer Position des Zielobjekts in einer mit der ID-Kamera erfassten Aufnahme des mit der Identifikationsstrahlung angestrahlten Zielobjekts erfolgt, eine automatische Identifizierung des Zielobjekts erfolgt, basierend auf der bestimmten Distanz und der bestimmten Position des Zielobjekts in der Aufnahme durch die ID-Kamera, und eine Zuordnung der zugehörigen Spezifikationen zum Zielobjekt erfolgt, basierend auf den durch die Zielobjekt-Datenbasis bereitgestellten Informationen.

Gemäss einer Ausführungsform sind die Beleuchtungsmittel beispielsweise ausgestaltet als mehrere einzelne Lichtquellen, insbesondere als LED, welche an den Seiten der Eintrittsoptik der ID-Kamera angebracht sind, wobei die optischen Achsen der einzelnen Lichtquellen jeweils einen unterschiedlichen lateralen Abstand zur optischen Achse der ID-Kamera aufweisen, insbesondere wobei die einzelnen Lichtquellen Strahlung in definierten voneinander unterschiedlichen Wellenlängenbereichen erzeugen.

Letzteres ist beispielsweise vorteilhaft für eine Identifizierung und Unterscheidung im Rahmen einer Bildbearbeitung einer mit der ID-Kamera erfassten Abbildung der am Zielobjekt reflektierten Strahlung einzelner gleichzeitig eingeschalteter Lichtquellen.

Eine weitere Ausführungsform ist dadurch gekennzeichnet, dass mindestens eine erste Lichtquelle der Beleuchtungsmittel auch als Anzielbeleuchtungsmittel für eine Zielerfassungsfunktionalität des Koordinatenmessgeräts zur Ausrichtung des Messstrahls auf das Zielobjekt vorgesehen ist, insbesondere wobei die erste Lichtquelle einen Teil der Identifikationsstrahlung und die Erfassungsstrahlung bereitstellt, beispielsweise jeweils abwechselnd je nach aktuellem Verwendungszweck oder überlagert.

Im Speziellen können die einzelnen Lichtquellen der Beleuchtungsmittel durch die Auswerte- und Steuereinheit gleichzeitig oder separat, insbesondere sequentiell, ein- und ausgeschaltet werden, wobei eine Ein- und/oder Ausschaltung der Lichtquellen zeitlich mit einer Aufnahme durch die ID-Kamera verknüpft wird.

Das erfindungsgemässe Koordinatenmessgerät wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1:: Beispiel für eine typische Anwendung eines erfindungsgemässen Koordinatenmessgeräts in der industriellen Vermessung;
- Fig. 2:: schematischer äusserer Aufbau eines beispielhaften Koordinatenmessgeräts;
- Fig. 3a,b:: schematischer Aufbau zweier erfindungsgemässer Koordinatenmessgeräte mit einer (a) oder mehrerer (a) Strahlquellen zur Erzeugung eines Messstrahls und eines Trackingstrahls sowie mit einer (a) oder mehrerer (b) spezifischen Kameras;
- Fig. 4a-d:: schematischer Aufbau typischer Zielobjekte mit Identifikationselementen für eine passive (a-c) oder aktive (d) Identifikation;
- Fig. 5a,b:: schematischer Aufbau eines erfindungsgemässen Koordinatenmessgeräts (a) und eine beispielhafte mit der ID-Kamera erfasste Abbildung des Zielobjekts (b) für eine Identifikation eines Zielobjekts ohne spezifisch am Zielobjekt angebrachtes Identifikationselement;
- Fig. 6:: schematischer Aufbau einer Kalibration eines System-Clocks für einen Treiber einer Distanzmessung eines Distanzmessmoduls eines Koordinatenmessgeräts.

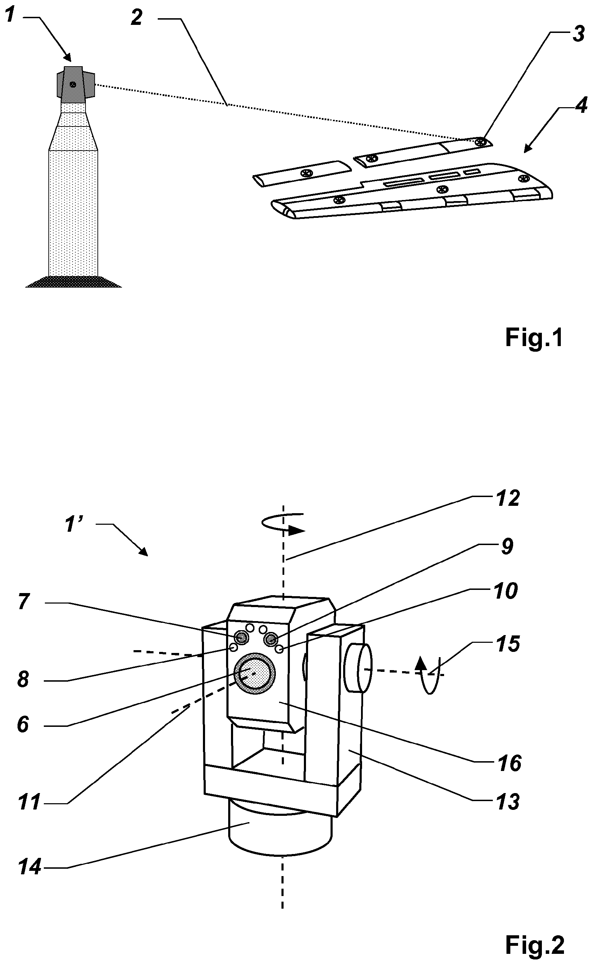

**Figur 1** zeigt eine beispielhafte Ausführungsform eines Koordinatenmessgeräts 1, hier ausgebildet als Lasertracker in der industriellen Vermessung, um mit einem scannenden Lasermessstrahl 2 Oberflächen von hergestellten Gegenständen 4 abzutasten und deren räumliche Dimensionen in Form von Koordinaten zu bestimmen. Oft wird hierbei beispielsweise vermittels mehreren am vermessenden Objekt 4 angebrachten Zielobjekten mit Retroreflektoren 3 für den Lasermesstrahl 2 des Lasertrackers 1 gemessen.

Um Bewegungen des zu vermessenden Objekts zu erkennen und nachvollziehen zu können, sodass der Lasermessstrahl 2 auf dem Retroreflektor 3 ausgerichtet bleibt, weist der Lasertracker 1 typischerweise eine Zielerfassungseinheit und eine Zielverfolgungseinheit auf, um eine fortlaufende Zielverfolgung (Tracking) eines vom Lasertracker 1 mit dem Laserstrahl 2 erfassten Retroreflektors 3 zu gewährleisten und so die Entfernung und Position des Zielpunkts fortlaufend relativ zum Lasertracker 1 bestimmt werden kann.

Die Kenntnis des Typs eines aktuell erfassten Retroreflektors ist erforderlich, da der Retroreflektor 3 einerseits typischerweise einen bekannten, je nach Montierungsart unterschiedlichen, Versatz zur effektiv zu vermessenden Position aufweist. Andererseits weisen unterschiedliche Reflektortypen, z.B. Tripelprismen, Cateye, unterschiedliche optische Korrekturfaktoren auf, beispielsweise eine von Null abweichende Additionskonstante. Insbesondere bei Kompensationsmessungen ist es wichtig, dass der richtige Reflektortyp erkannt und im Rahmen einer Messung mit dem Koordinatenmessgerät 1 die korrekten optischen Spezifikationen und Kompensationsparameter angewendet werden.

**Figur 2** zeigt schematisch den äusseren Aufbau eines beispielhaften Lasertrackers 1' mit den Elementen Ein- und Austrittsoptik 6, eine Zielerfassungskamera 7 mit Anzielbeleuchtungsmitteln 8, hier mittels zwei Lichtquellen an zwei Seiten der Eintrittsoptik der Zielerfassungskamera 7, sowie einer Übersichtskamera 9 mit Übersichtsbeleuchtungsmitteln 10, hier ebenfalls mit zwei einzelnen Lichtquellen an zwei Seiten der Eintrittsoptik der Übersichtskamera 9. Ferner sind gezeigt: die Zielachse 11, eine Schwenkachse 12, um welche die Stütze 13 bezüglich einer Basis 14 drehbar ist, und eine Kippachse 15, um welche die Strahllenkeinheit 16 bezüglich der Stütze 13 neigbar ist.

Eine Regelungs- und Steuerungseinheit (hier nicht dargestellt) erfasst und verarbeitet die Messwerte verschiedener Sensoren, beispielsweise einer Distanzmessvorrichtung, Winkelencoder zur Bestimmung einer relativen oder absoluten Achslage, und steuert Achslagemotoren zur Ausrichtung der Strahllenkeinheit 16. Eine Anzeigevorrichtung (nicht dargestellt) zeigt Informationen über Messungen und den Gerätezustand und kann auch Bilder von einem der vorhandenen Bildsensoren, insbesondere der Übersichtskamera 9, anzeigen. Die Zielerfassungskamera 7 kann alternativ auch mehr als eine Optik aufweisen.

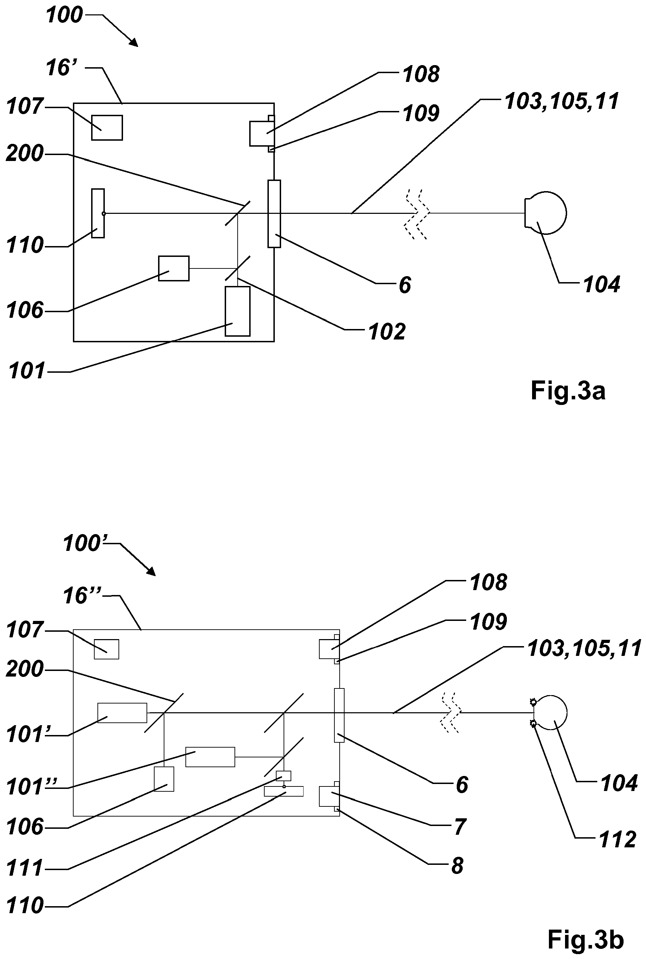

Die Figuren 3a und 3b illustrieren anhand eines schematischen Aufbaus verschiedene Ausführungsformen eines erfindungsgemässen Koordinatenmessgeräts.

**Figur 3a** zeigt ein erfindungsgemässes Koordinatenmessgerät 100 mit einer Strahllenkeinheit 16' umfassend eine Strahlquelle 101, deren Strahlung 102 sowohl als

Messstrahlung 103 zur Ermittlung der Entfernung zum Zielobjekt 104 als auch als Trackingstrahl 105 zur Zielverfolgung verwendet wird. Ferner weist das Koordinatenmessgerät 100 eine Auswerte- und Steuereinheit 107 zur Datenspeicherung und Steuerung des Koordinatenmessgeräts 100 auf, hier z.B. ebenfalls angeordnet in der Strahllenkeinheit 16'.

Die Strahllenkeinheit 16' verfügt an seiner dem Zielobjekt 104 zugewandten Vorderseite über eine Ein- und Austrittsoptik 6 zur Aussendung von Strahlung entlang der Zielachse 11 und zum Einlass reflektierter Strahlung, sowie über eine Identifikations-Kamera, nachfolgend ID-Kamera 108 genannt, mit Identifikationsbeleuchtungsmitteln 109, hier beispielsweise ausgestaltet als zwei LED-Lichtquellen an zwei Seiten der Eintrittsoptik der ID-Kamera 108, wobei als ID-Kamera 108 beispielsweise eine entsprechend angepasste Zielerfassungskamera verwendet wird, welche gegebenenfalls auch als Übersichtskamera zur Bereitstellung eines Übersichtsbildes für einen Benutzer vorgesehen ist.

Im gezeigten Beispiel stellen die Identifikationsbeleuchtungsmittel 109 eine ein Spektrum von Wellenlängenbereichen abdeckende Identifikationsstrahlung, sowie eine Erfassungsstrahlung in einem definierten Wellenlängenbereich ausserhalb des Spektrums der Identifikationsstrahlung bereit.

Alternativ können auch separate weitere spezifische Kameras als Zielerfassungskamera und/oder Übersichtskamera verwendet werden (siehe z.B. Fig. 3b) und/oder separate Beleuchtungsmittel für die Erzeugung der Identifikationsstrahlung und der Erfassungsstrahlung, insbesondere wobei die Beleuchtungsmittel Strahlung unterschiedlicher Wellenlängenbereiche erzeugen oder die Kameras eine unterschiedliche wellenlängenabhängige Empfindlichkeit aufweisen. Weiter kann durch die Auswerte- und Steuereinheit 107 auch eine Abbildung erfasst mit einer für mehrere Funktionen benutzten Kamera, beispielsweise wie hier die ID-Kamera 108, welche gleichzeitig als Zielerfassungskamera verwendet wird, mittels Bildbearbeitung für einen jeweiligen Zweck optimiert werden, insbesondere hinsichtlich einer Identifikation eines erfassten Zielobjekts 104 oder einer Zielerfassung eines Zielobjekts 104.

Die Kameraoptik der ID-Kamera 108 kann insbesondere als Fixfokus-Objektiv mit unveränderlichem Fokus und unveränderlichem Zoom oder als Vario-Optik ausgestaltet sein.

Die Strahllenkeinheit 16' weist in ihrem Innern ferner eine Distanzmessvorrichtung 106 zum Empfang der reflektierten Messstrahlung 103 und zum Ermitteln einer Distanz zu einem Zielobjekt 104 auf. Die Distanzmessvorrichtung 106 ist im gezeigten Beispiel ein Absolutdistanzmessgerät, kann aber auch ein Interferometer, oder eine Kombination von beiden sein.

Ferner weist hier die Strahllenkeinheit 16' einen flächigen Trackingdetektor 110 zum Empfang des am Zielobjekt 104 reflektierten Trackingstrahls 105 und zur Erzeugung eines Ausgangssignals zur Steuerung einer Zielverfolgungsfunktionalität des Koordinatenmessgeräts 100 auf.

Vorzugsweise verlaufen die optischen Achsen des Trackingsstrahls 105 und der Messstrahlung 103 ausserhalb des Koordinatenmessgeräts 100 koaxial zueinander und zur Zielachse 11, also auf einer gemeinsamen Emissionsachse wie hier dargestellt. Alternativ sind aber auch Ausführungsformen möglich mit einer parallelen Anordnung der Achsen oder auch eine Anordnung, wobei die Achsen nur annähernd parallel zueinander verlaufen, beispielsweise nur hinsichtlich einer Fernnäherung bei Messungen über grosse Distanzen.

Obwohl hier nicht dargestellt, kann das Koordinatenmessgerät 100 und/oder die Strahllenkeinheit 16' natürlich auch weitere für Koordinatenmessgeräte zur Zielverfolgung typische Komponenten enthalten, beispielsweise eine zusätzliche Übersichtskamera, zusätzliche Beleuchtungsmittel, eine Zoom- oder Variokamera, fixe oder schaltbare Filtervorrichtungen für Kameras, eine Pointer-Strahlquelle, etc.

Darüber hinaus weist die Strahllenkeinheit 100 eine Anzahl an Strahlteilern 200 auf, über die die Messstrahlung 103 und der Trackingstrahl 105 entlang der Zielachse 11 durch die Ein- und Austrittsoptik 6 emittiert werden und über die die vom Zielobjekt 104 reflektierte Strahlung auf die Distanzmessvorrichtung 106 und die Sensoroberfläche des Trackingdetektors 110 geleitet wird.

**Figur 3b** zeigt eine weitere Ausführungsform eines erfindungsgemässen Koordinatenmessgeräts 100', wobei hier eine Strahllenkeinheit 16" eine erste Strahlungsquelle 101' zur Erzeugung einer Messstrahlung 103, sowie eine zweite Strahlungsquelle 101" zur Erzeugung eines Trackingstrahls 105 umfasst. Ferner weist das Koordinatenmessgerät 100' eine Auswerte- und Steuereinheit 107 zur Datenspeicherung und Steuerung des Koordinatenmessgeräts 100' auf, hier z.B. ebenfalls angeordnet in der Strahllenkeinheit 16".

Die Strahllenkeinheit 16" verfügt an seiner dem Zielobjekt 104 zugewandten Vorderseite über eine Ein- und Austrittsoptik 6 zur Aussendung von Strahlung entlang der Zielachse 11 und zum Einlass reflektierter Strahlung, sowie über eine Identifikations-Kamera, nachfolgend ID-Kamera 108 genannt, mit Identifikationsbeleuchtungsmitteln 109, hier beispielsweise ausgestaltet als zwei LED-Lichtquellen an zwei Seiten der Eintrittsoptik der ID-Kamera 108, wobei die ID-Kamera auch als Übersichtskamera zur Bereitstellung eines Übersichtsbildes für einen Benutzer vorgesehen ist. Weiter verfügt die Strahllenkeinheit 16" in der gezeigten Ausführungsform über eine separate Zielerfassungskamera 7 mit Anzielbeleuchtungsmitteln 8, hier beispielsweise ausgestaltet als zwei LED-Lichtquellen an zwei Seiten der Eintrittsoptik der Zielerfassungskamera 7.

In ihrem Innern weist die Strahllenkeinheit 16" eine Distanzmessvorrichtung 106 zum Empfang der reflektierten Messstrahlung 103 und zum Ermitteln einer Distanz zu einem Zielobjekt 104 auf. Die Distanzmessvorrichtung 106 ist im gezeigten Beispiel ein Absolutdistanzmessgerät, kann aber auch ein Interferometer, oder eine Kombination von beiden sein.

Ferner weist die Strahllenkeinheit 16" einen Trackingdetektor 110 zum Empfang des am Zielobjekt 104 reflektierten Trackingstrahls 105 auf, beispielsweise mit einer Bestimmung eines Auftreffpunkts der reflektierten Trackingstrahlung auf einem positionssensitiven Detektor, und zur Erzeugung eines Ausgangssignals zur Steuerung einer Zielverfolgungsfunktionalität des Koordinatenmessgeräts 100'.

Vorzugsweise verlaufen die optischen Achsen des Trackingsstrahls 105 und der Messstrahlung 103 (welche auch identisch sein können) ausserhalb des Koordinatenmessgeräts 100' koaxial zueinander und zur Zielachse 11, also auf einer gemeinsamen Emissionsachse wie hier dargestellt. Dies setzt voraus, dass die beiden Strahlquellen 101',101" eine gemeinsame Austrittsoptik 6 aufweisen. Eine gemeinsame Ein- und Austrittsoptik 6 zweier Strahlengänge bedeutet, dass die beiden Strahlengänge durch dasselbe optische Element, wie eine Linse oder eine Scheibe, aus dem Gerät in die Umgebung des Gerätes austreten oder aus der Umgebung des Gerätes in das Gerät eintreten. In der Regel sind dabei die Strahlengänge zumindest annähernd koaxial.

Darüber hinaus weist die Strahllenkeinheit 100' eine Anzahl an Strahlteilern 200 auf, über die die Messstrahlung 103 und der Trackingstrahl 105 entlang der Zielachse 11 durch die Ein- und Austrittsoptik 6 emittiert werden und über die die vom Zielobjekt 104 reflektierte Strahlung auf die Distanzmessvorrichtung 106 und die Sensoroberfläche des Trackingdetektors 110 geleitet wird.

Die Messstrahlung 103 und der Trackingstrahl 105 unterscheiden sich insbesondere hinsichtlich ihrer Polarität und/oder Wellenlänge so voneinander, dass durch eine entsprechende Ausgestaltung eines vor dem Trackingdetektor 110 positionierten Filters 111 die für die Entfernungsmessung bestimmte reflektierte Strahlung herausgefiltert wird und nicht zum Trackingdetektor 110 gelangt. Ebenso kann so eventuell auftretende externe Störstrahlung herausgefiltert werden, sodass nur Strahlung des Trackingstrahls 105 auf den Sensor des Trackingdetektors 110 gelangt. Alternativ oder zusätzlich kann durch eine entsprechende Ausgestaltung der Strahlteiler 200 die Gesamtheit der reflektierten Strahlung in einen für die Distanzmessung bestimmten Anteil und einen für die Zielverfolgung bestimmten Anteil trennbar sein.

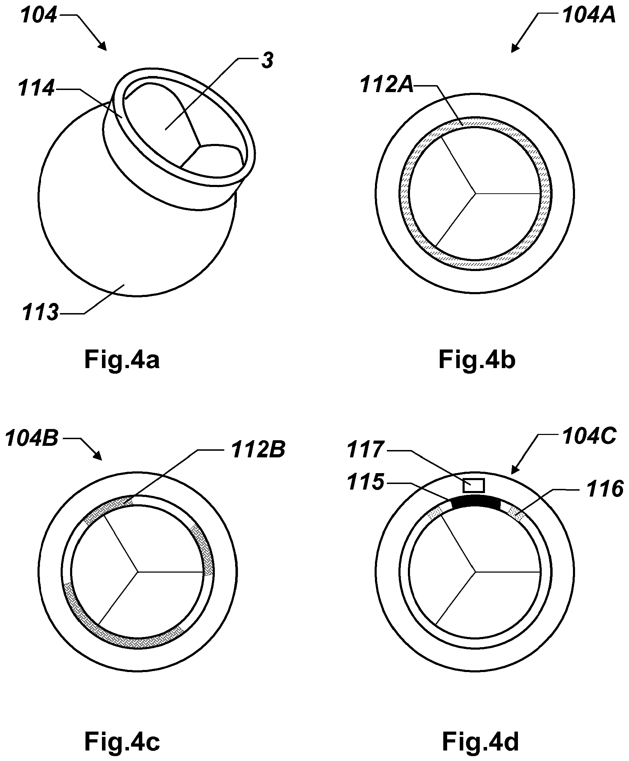

Ebenfalls angedeutet ist ein Zielobjekt 104, welches nicht Teil der Erfindung ist, mit Identifikationselementen 112, beispielsweise angeordnet auf dem Reflektorkragen des Retroreflektors des Zielobjekts 104. Beispielhafte Ausführungsformen von Identifikationselementen 112 werden in den Figuren 4a bis 4d dargestellt.

**Figur 4a** zeigt ein typisches, nicht als Teil der Erfindung angesehenes, Zielobjekt 104 mit einem Gehäuse 113, hier ausgebildet als Kugel, für einen Retroreflektor 3. Typische Zielobjekte mit Retroreflektoren umfassen beispielsweise "Hollow Corner" Retroreflektoren, Tripelprismen, Etalon-Reflektoren, oder "CatEye" Reflektoren. Bei Messungen mit einem erfindungsgemässen Koordinatenmessgerät 100,100' (siehe Figuren 3a und 3b) ist die Kenntnis des Reflektortyps erforderlich, da einerseits die Position der Würfelecke (hier im Kugelzentrum) gemessen und z.B. das zu vermessende Werkstück mit der Oberfläche der Kugel berührt wird, und andererseits einige Reflektortypen (Tripelprismen, CatEye) eine von Null abweichende Additionskonstante haben. Insbesondere bei Kompensationsmessungen ist es wichtig, dass der richtige Reflektortyp verwendet wird. Im Stand der Technik muss der verwendete Reflektor manuell eingegeben werden, was je nach Anwendung aufwendig und fehlerbehaftet sein kann.

Gemäss einer nicht zwingend als Teil der Erfindung angesehenen Möglichkeit wird ein Zielobjekt 104 automatisch vom Koordinatenmessgerät 100,100' (siehe Figuren 3a und 3b) identifiziert. Dazu weist das Koordinatenmessgerät 100,100' eine Zielobjekt-Datenbasis auf, gespeichert auf der Auswerte- und Steuereinheit 107, welche Informationen für einen Satz von definierten Zielobjekten bereitstellt, mindestens umfassend einen Satz von Identifikationsmerkmalen und Spezifikationen für ein Zielobjekt.

Dabei weist ein nicht als Teil der Erfindung angesehenes Zielobjekt in einer speziellen Ausführungsform beispielsweise ein für das Zielobjekt spezifisches Identifikationselement auf, beispielsweise angeordnet auf dem Reflektorkragen 114, welches vom Koordinatenmessgerät 100,100' automatisch erkannt wird.

**Figur 4b** zeigt eine Frontalansicht eines nicht als Teil der Erfindung angesehenen Zielobjekts 104A in einer ersten Ausführungsform. Dabei stellt die Zielobjekt-Datenbasis des nicht zwingend als Teil der Erfindung angesehenen Koordinatenmessgeräts 100,100' (siehe Figuren 3a, 3b) Informationen für einen Satz von definierten Zielobjekten bereit, mindestens umfassend einen Satz von definierten und bestimmte Wellenlängenbereiche abdeckenden ID-Farben mit zugehörigen Spezifikationen für ein Zielobjekt.

Mittels Identifikationsbeleuchtungsmittel 109 (siehe Figuren 3a, 3b) einer eine für das Spektrum der Wellenlängenbereiche der ID-Farben empfindlichen ID-Kamera 108 (siehe Figuren 3a und 3b) mit einer Blickrichtung entlang der Zielachse 11, insbesondere wobei die ID-Kamera 108 auch zur Bereitstellung eines Übersichts-Bildes für einen Benutzer vorgesehen ist, wird das Zielobjekt 104A mit einer das Spektrum der Wellenlängenbereiche der ID-Farben abdeckenden Identifikationsstrahlung angestrahlt, wobei das nicht als Teil der Erfindung angesehene Zielobjekt 104A ein retroreflektierendes Identifikationselement 112A aufweist, hier angeordnet auf dem Reflektorkragen 114 (siehe Fig.4a) welches nur Strahlung eines eine ID-Farbe aus dem Satz von definierten ID-Farben definierenden Wellenlängenbereichs reflektiert.

Im Rahmen einer Zielerfassungsfunktionalität erfolgt beispielsweise eine automatische Erfassung, insbesondere auch Lokalisierung, des Zielobjekts 104A durch das nicht als Teil der Erfindung angesehene Koordinatenmessgerät 100,100', welche durch die Auswerte- und Steuereinheit 107 zeitlich mit einer Bildaufnahme durch die ID-Kamera 108 verknüpft wird und wobei durch die Auswerte- und Steuereinheit 107 für das erfasste Zielobjekt 104A mittels Bildbearbeitung einer mit der ID-Kamera 108 erfassten Abbildung eine ID-Farbe bestimmt wird und eine automatische Identifizierung des erfassten Zielobjekts 104A erfolgt, basierend auf der bestimmten ID-Farbe des Zielobjekts 104A.

Ein allenfalls störender Einfluss des Identifikationselements 112A auf die Zielerfassungsfunktionalität, beispielsweise mittels Anzielbeleuchtungsmitteln und einer Zielerfassungskamera 7 (siehe Figs. 3a,3b) kann beispielsweise dadurch kompensiert werden, dass das Identifikationselement 112A nichtretroreflektiv ist für den Wellenlängenbereich einer Erfassungsstrahlung der Zielverfolgungsfunktionalität, dass die Zielerfassungskamera 7 unempfindlich ist für Strahlung des Spektrums der Wellenlängenbereiche der ID-Farben, oder dass die am Identifikationselement reflektierte Strahlung in einer mit der Zielerfassungskamera 7 erfassten Abbildung durch die Auswerte- und Steuereinheit 107 mittels Bildbearbeitung berücksichtigt, z.B. maskiert, wird.

Zudem kann die nicht als Teil Erfindung angesehene ID-Kamera 108 derart ausgestaltet sein, dass sie unempfindlich ist für Strahlung ausserhalb des Spektrums der Wellenlängenbereiche der ID-Farben.

Alternativ zu einem Identifikationselement 112A, welches nur Strahlung einer ID-Farbe reflektiert, kann das Identifikationselement selber in einer ID-Farbe ausgestaltet sein, beispielsweise aus einem retroreflektierenden Material.

Da dieses nicht als Teil der Erfindung angesehene Vergleichsbeispiel nicht zwingend eine spezifische Identifikationsstrahlung erfordert, sondern auch alleine mittels dem vorhandenen - veränderlichen - Umgebungslicht oder mittels der Strahlung der Beleuchtungsmittel der Zielerfassungseinheit betrieben werden kann, weist ein von der ID-Kamera 108 detektiertes Identifikationselement einerseits eine vergleichsweise geringe Intensität auf und andererseits eine durch den Wellenlängebereich des Umgebungslichts beinflusste Farbe.

In diesem nicht als Teil der Erfindung angesehenen Vergleichsbeispiel ist es deshalb vorteilhaft, wenn im Rahmen der Zielerfassungsfunktionalität neben der Erfassung des Zielobjekts auch eine automatische Lokalisierung des erfassten Zielobjekts erfolgt, welche durch die Auswerte- und Steuereinheit 107 zeitlich mit einer Bildaufnahme durch die ID-Kamera 108 verknüpft wird.

In einem weiteren alternativen nicht als Teil der Erfindung angesehenen Vergleichsbeispiel weist das Identifikationselement statt einer ID-Farbe ein ID-Muster auf, insbesondere aus einem retroreflektierenden Material, wobei die Zielobjekt-Datenbasis einen Satz von definierten ID-Mustern mit zugehörigen Spezifikationen für ein Zielobjekt bereitstellt und eine Identifikation des Zielobjekts aufgrund eines bestimmten ID-Musters erfolgt.

Auch in diesem nicht als Teil der Erfindung angesehenen Vergleichsbeispiel ist es vorteilhaft, wenn neben der Erfassung des Zielobjekts auch eine automatische Lokalisierung des erfassten Zielobjekts erfolgt.

Weiter ist es vorteilhaft, wenn die nicht als Teil der Erfindung angesehene ID-Kamera 108 mit einer Vario-Optik mit einstellbarer Vergrösserung, basierend auf einer gemessenen Entfernung des Zielobjekts mittels der Entfernungsmesseinheit, ausgestaltet ist, um einen definierten und in der Zielobjekt-Datenbasis hinterlegten Bildmassstab für eine mit der ID-Kamera 108 erfasste Abbildung des Zielobjekts mit einem ID-Muster bereitzustellen. Alternativ oder zusätzlich kann z.B. ein definierter Abbildungsmassstab auch mittels Bildbearbeitung der mit der ID-Kamera erfassten Abbildung erfolgen.

**Figur 4c** zeigt eine Frontalansicht eines nicht als Teil der Erfindung angesehenen Zielobjekts 104E in einer weiteren, nicht-rotationssymmetrischen Ausführungsform des Identifikationselements 112B, hier ein ID-Muster aufweisend. Diese nicht als Teil der Erfindung angesehene Ausführungsform hat den Vorteil, dass eine durch die ID-Kamera 108 (siehe Figs. 3a,3b) - oder durch eine alternative Kamera - erfasste Abbildung des Identifikationselements 112B mittels Bildbearbeitung durch die Auswerte- und Steuereinheit 107 ebenfalls zur Erfassung der räumlichen Ausrichtung des Zielobjekts 104B und/oder zur Groblokalisierung des Zielobjekts 104B herangezogen werden kann.

**Figur 4d** zeigt eine weitere nicht als Teil der Erfindung angesehene Ausführungsform eines Zielobjekts 104C, hier ein aktives Zielobjekt. In dieser Ausführungsform weist das nicht als Teil der Erfindung angesehene Koordinatenmessgerät eine Sendeeinheit zum Aussenden eines Abfragesignals mit einem ersten definierten Wellenlängenbereich auf, insbesondere modulierte Strahlung mit einer definierten Modulationsfrequenz, sowie eine für einen zweiten Wellenlängenbereich empfindliche Kamera mit einer Blickrichtung entlang der Zielachse zur Erfassung eines Antwortsignals mindestens eines Zielobjekts 104C, insbesondere wobei die Kamera auch zur Bereitstellung eines Übersichts-Bildes für einen Benutzer vorgesehen ist. Die Zielobjekt-Datenbasis stellt Informationen bereit für einen Satz von definierten Zielobjekten, mindestens umfassend einen Satz von definierten Abfrage- und Antwortsignalen mit zugehörigen Spezifikationen für ein Zielobjekt 104C, wobei das Zielobjekt 104C eine für den ersten Wellenlängenbereich empfindliche Empfängereinheit 115 aufweist, sowie eine Sendeeinheit 116 zur Emission eines Antwortsignals mit einem definierten Wellenlängenbereich, welcher mindestens einen Teil des zweiten Wellenlängenbereichs umfasst und ein Antwortsignal des Zielobjekts 104C somit von der Kamera detektiert werden kann.

Das nicht als Teil der Erfindung angesehene Zielobjekt 104C weist ferner eine Kontrollelektronik auf, hier z.B. einen Mikroprozessor 117, der sich in einem Stromsparmodus befindet, wobei der Mikroprozessor 117 mit einem für das Zielobjekt 104C spezifischen Aufwachsignal durch die Empfängereinheit 115 aktiviert werden kann um den Stromsparmodus zu verlassen.

Das nicht als Teil der Erfindung angesehene Koordinatenmessgerät sendet beispielsweise ein für ein Zielobjekt 104C spezifisches Abfragesignal oder einen generellen Blinkcode. Das Zielobjekt 104C sendet daraufhin ein für das Zielobjekt 104C spezifisches Antwortsignal, wenn es das Abfragesignal oder den generellen Blinkcode empfängt. Das Koordinatenmessgerät kann somit Zielobjekte im Blickfeld seiner Kamera identifizieren oder ein spezifisches Zielobjekt direkt ansprechen. Alternativ zu einer Identifizierung eines Zielobjekts mittels eines spezifisch am Zielobjekt angebrachten Identifikationselements oder eines Sendens und Empfangens von Abfrage- und Antwortsignalen, kann ein Zielobjekt und ein zugehöriger Reflektortyp gemäss der vorliegenden Erfindung auch ohne Hilfsmittel am Zielobjekt identifiziert werden, beispielsweise mittels eines Auswertens von Messungen mit einem Intensitätsdetektor der Entfernungsmesseinheit, einem Auswerten einer Abbildung des reflektierten Trackingstrahls auf einem Trackingdetektor und/oder mittels einer Kamera, beispielsweise der ID-Kamera 108 (siehe Figs. 3a, 3b), erfassten Abbildung des Zielobjekts, welches durch eine punktförmige Lichtquelle angestrahlt wird, z.B. durch die Identifikationsbeleuchtungsmittel 109.

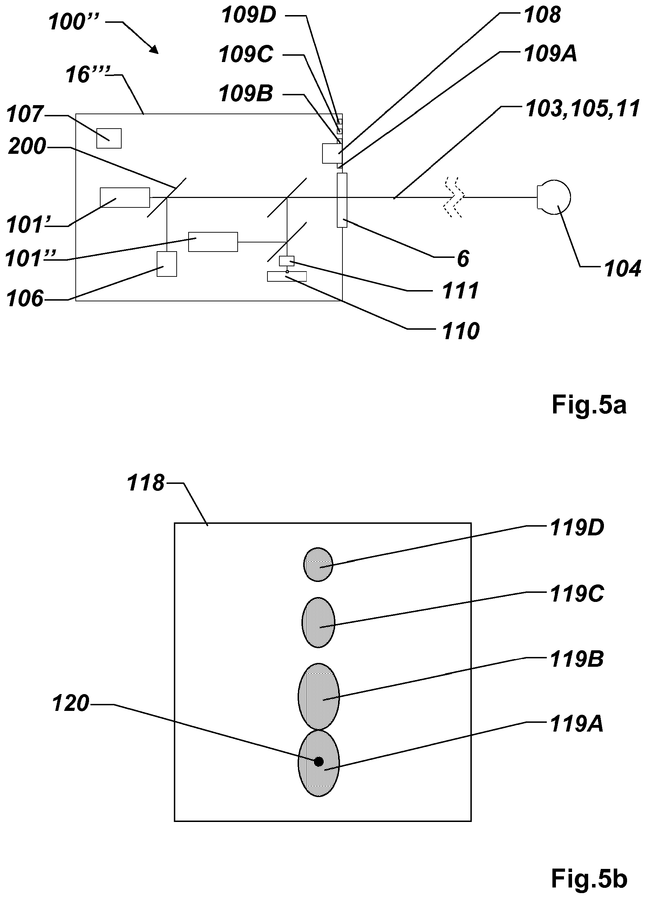

Die Figuren 5a und 5b illustrieren eine Ausführungsform der vorliegenden Erfindung zur Identifizierung eines Zielobjekts 104 ohne dabei ein spezifisch am Zielobjekt 104 angebrachtes Identifikationselement zu verwenden.

**Figur 5a** zeigt eine schematische Ausführungsform eines erfindungsgemässen Koordinatenmessgeräts 100" mit einer Strahllenkeinheit 16''', welche im Wesentlichen dieselben Komponenten und Elemente aufweist wie die Strahllenkeinheit gemäss Fig. 3b, hier allerdings ohne eine separate Zielerfassungskamera und ohne separate Anzielbeleuchtungsmittel. Im gezeigten Beispiel wird die ID-Kamera 108 gleichzeitig als Zielerfassungskamera und gegebenenfalls als Kamera zur Bereitstellung eines Übersichtsbildes für einen Benutzer verwendet (siehe z.B. auch die Beschreibung zu Fig. 3a).

Weiter verfügt das erfindungsgemässe Koordinatenmessgerät 100" in dieser Ausführungsform über Identifikationsbeleuchtungsmittel, ausgestaltet als mehrere einzelne Lichtquellen, beispielsweise LEDs, welche an den Seiten der Eintrittsoptik der ID-Kamera 108 angebracht sind und einen unterschiedlichen lateralen Abstand zur optischen Achse der ID-Kamera 108 aufweisen. Im gezeigten Beispiel weist das Koordinatenmessgerät 100" vier separate Lichtquellen 109A,109B,109C,109D auf. Zwecks besserer Identifizierung und späterer Unterscheidung im Rahmen einer Bildbearbeitung einer mit der ID-Kamera 108 erfassten Abbildung der am Zielobjekt 104 reflektierten Strahlung der Identifikationsbeleuchtungsmittel können die unterschiedlichen Lichtquellen z.B. Strahlung in unterschiedlichen Wellenlängenbereichen erzeugen.

Mindestens eine der vier Lichtquellen der Identifikationsstrahlung, vorzugsweise eine derjenigen unmittelbar an der Seite der ID-Kamera 108, wird im gezeigten Beispiel zudem für die Zielerfassungsfunktionalität als Anzielbeleuchtungsmittel verwendet. Beispielsweise stellt diese Hauptlichtquelle 109A neben einer ein Spektrum von Wellenlängenbereichen abdeckenden Identifikationsstrahlung ebenfalls eine Erfassungsstrahlung in einem definierten Wellenlängenbereich ausserhalb des Spektrums der Identifikationsstrahlung bereit, wobei beispielsweise mittels einer schaltbaren Filterfunktionalität (nicht gezeigt) der ID-Kamera 108 die Empfindlichkeit der ID-Kamera 108 für Strahlung innerhalb und ausserhalb des Spektrums der Wellenlängenbereiche der Identifikationsstrahlung regelbar ist.

Die einzelnen Lichtquellen werden entweder gleichzeitig oder separat, beispielsweise sequentiell, eingeschaltet, um das Zielobjekt 104 anzustrahlen. Abhängig von der Distanz zwischen dem Koordinatenmessgerät 100" und dem Zielobjekt 104, einem lateralen Durchmesser des Retroreflektors des Zielobjekts 104 und dem lateralen Abstand zwischen dem Emissionspunkt (beispielsweise definiert durch die jeweiligen optischen Achsen) der Lichtquellen 109A,109B,109C,109D und der optischen Achse der ID-Kamera 108, wird das Zielobjekt 104 in einer mit der ID-Kamera 108 erfassten Abbildung mit einer für jede eingeschaltete Lichtquelle spezifischen Form und einer unterschiedlichen Position abgebildet.

**Figur 5b** zeigt eine beispielhafte mit der ID-Kamera 108 erfasste Abbildung 118 des Zielobjekts 104 für eine definierte Distanz des Koordinatenmessgeräts 100" zum

Zielobjekt 104, unter Verwendung der Identifikationsbeleuchtungsmittel aus Fig. 5a. Für jede Lichtquelle wird das Zielobjekt 104 in der mit der ID-Kamera 108 erfassten Abbildung 118 in einer spezifischen Form und einer spezifischen Position abgebildet 119A,119B,119C,119D.

Das Koordinatenmessgerät 100" umfasst ferner eine Zielobjekt-Datenbasis, welche Informationen für einen Satz von definierten Zielobjekten bereitstellt, mindestens umfassend Identifikationsmerkmale und Spezifikationen für ein mit den Identifiktationsbeleuchtungsmitteln angestrahltes Zielobjekt, wobei die Identifikationsmerkmale mindestens die Position eines im Rahmen der Zielerfassungsfunktionalität erfassten Zielobjekts in einer Bildaufnahme 118 durch die ID-Kamera 104 umfassen, abhängig von einer Distanz zwischen dem Koordinatenmessgerät 100" und dem Zielobjekt, einem lateralen Durchmesser des Retroreflektors des Zielobjekts und einem lateralen Abstand zwischen einem Emissionspunkt der Identifikationsbeleuchtungsmittel 109A,109B,109C,109D und einer optischen Achse der ID-Kamera 108.

Im Rahmen einer Zielerfassungsfunktionalität erfolgt beispielsweise eine automatische Erfassung und eine Lokalisierung einer Referenzposition 120 des erfassten Zielobjekts 104, spezifisch für eine Bestrahlung des Zielobjekts 104 mit der Hauptlichtquelle 109A, welche durch die Auswerte- und Steuereinheit 107 (siehe Fig.5a) zeitlich mit einer Bildaufnahme 118 durch die ID-Kamera 108 verknüpft wird und wobei durch die Auswerte- und Steuereinheit 107 für das erfasste Zielobjekt 104 mittels Bildbearbeitung einer mit der ID-Kamera 108 erfassten Abbildung 118 beispielsweise eine für eine der Lichtquellen 109A,109B,109C,109D spezifisch abgebildete Form oder Position 119A,119B,119C,119D des abgebildeten Zielobjekts relativ zum Referenzpunkt 120 erkannt wird und, basierend auf einer mittels der Entfernungsmesseinheit bestimmten Distanz zwischen dem Koordinatenmessgerät 100" und dem lokalisierten Zielobjekt und der spezifisch abgebildeten Form oder Position des mit der ID-Kamera 108 abgebildeten Zielobjekts 119A,119B,119C,119D, eine automatische Identifizierung des erfassten Zielobjekts erfolgt, basierend auf der bestimmten Distanz und der bestimmten Position oder Form des lokalisierten Zielobjekts in der Bildaufnahme 118 durch die ID-Kamera 108.

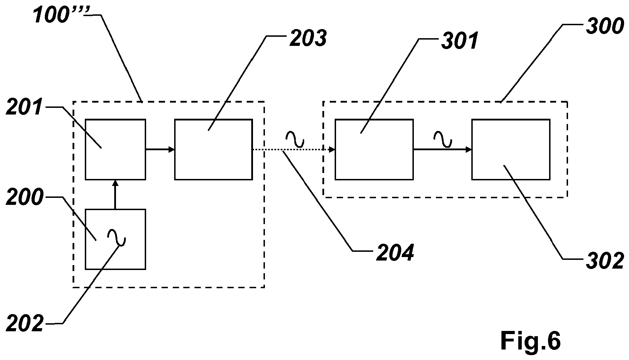

**Figur 6** zeigt eine Kalibration eines System-Clocks 200 für einen Treiber 201 einer Distanzmessung eines Distanzmessmoduls eines Koordinatenmessgeräts 100''', wie es beispielsweise in einem Lasertracker verwendet werden kann. Das zu kalibrierende Clock-Signal 202 des System-Clocks 200 des Koordinatenmessgeräts 100''' wird auf einen beispielsweise durch eine Lichtquelle 203 des Distanzmessmoduls des Koordinatenmessgeräts bereitgestellten optischen Strahl 204 aufmoduliert, z.B. mittels Amplitudenmodulation.

Die Signalquelle kann insbesondere konfigurierbar sein und eine Ausgabe von mehreren zu kontrollierenden Signalen ermöglichen und bei Bedarf komplett ausgeschaltet werden.

Dadurch wird insbesondere eine einfach zugängliche, kontaktlose Messung des Treiber-Clocks mittels einer vergleichsweise einfachen Prüfvorrichtung 300 ermöglicht, beispielsweise mittels eines Lichtdetektors 301 und einer Analyse-Einheit 302. Da optische Strahlung als Signalträger eingesetzt wird, ist zudem insbesondere eine Ausgabe von sehr hohen Frequenzen (∼GHz) auch ohne aufwendige Schnittstellen möglich.

## Patentansprüche

1. Koordinatenmessgerät (100, 100',100'',100'''), insbesondere Lasertracker, zum Erfassen einer Position eines im Raum bewegbaren, einen Retroreflektor (3) aufweisenden Zielobjekts (104,104A,104B,104C), wobei das Koordinatenmessgerät mindestens aufweist
• eine Strahlungsquelle (101,101') zur Emission eines optischen Messstrahls (103), wobei der Messstrahl mittels einer Strahllenkeinheit (16,16',16'',16''') in eine definierte Raumrichtung emittiert wird und dadurch eine Zielachse (11) definiert,
• eine Entfernungsmessfunktionalität (106) zur Bestimmung einer Distanz zum Zielobjekt mittels des Messstrahls (103),
• eine Winkelmessfunktionalität zur Bestimmung einer Emissionsrichtung des Messstrahls (103),
• eine Zielverfolgungsfunktionalität zur fortlaufenden Verfolgung des Zielobjekts, und
• eine Auswerte- und Steuereinheit (107) zur Datenspeicherung und Steuerung des Koordinatenmessgeräts,
wobei das Koordinatenmessgerät eine Zielobjekt-Datenbasis aufweist, gespeichert auf der Auswerte- und Steuereinheit, welche Informationen für einen Satz von einzelnen Zielobjekten bereitstellt, mindestens umfassend
• jeweils den einzelnen Zielobjekten zugeordnete Spezifikationen, und
• jeweils den einzelnen Zielobjekten zugeordnete Werte von Unterscheidungsparametern, wobei die Unterscheidungsparameter umfassen
∘ einen Parameter der für ein totales Retroreflektiervermögen eines Zielobjekts steht, insbesondere ein Verhältnis von auf das Zielobjekt auftreffender Strahlung zum am jeweiligen Zielobjekt retroreflektierten Anteil der auftreffenden Strahlung, und
∘ einen Parameter der für eine Aperturgrösse des Retroreflektors eines Zielobjekts steht, insbesondere ein Durchmesser oder eine Fläche einer mit einem Flächendetektor erfassten Aufnahme des Retroreflektors des jeweiligen Zielobjekts aus einer definierten Distanz,
wobei im Rahmen einer Identifikationsfunktionalität des Koordinatenmessgeräts automatisch gesteuert durch die Auswerte- und Steuereinheit für ein zu identifizierendes Zielobjekt
• ein Wert des mit einem Intensitätsdetektor (7,9,106,108,110) erfassten Intensitätssignals des Zielobjekts, und
• ein Durchmesser oder eine Fläche einer mit einem Flächendetektor (7,9,108,110) erfassten Aufnahme des Zielobjekts
bestimmt werden,
**dadurch gekennzeichnet, dass**
• eine automatische Identifizierung des Zielobjekts erfolgt, basierend auf dem bestimmten Wert des Intensitätssignals und dem Durchmesser bzw. der Fläche der erfassten Aufnahme des Zielobjekts, wobei für die Identifizierung der Wert des Intensitätssignals und der Durchmesser bzw. die Fläche der erfassten Aufnahme des Zielobjekts in Relation zu einer mit der Entfernungsmessfunktionalität bestimmten Distanz zum Zielobjekt gesetzt werden, und
• eine Zuordnung der zugehörigen Spezifikationen zum Zielobjekt erfolgt, basierend auf den durch die Zielobjekt-Datenbasis bereitgestellten Informationen.

2. Koordinatenmessgerät (100,100',100'',100''') nach Anspruch 1,
**dadurch gekennzeichnet, dass**
die Entfernungsmessfunktionalität eine Absolutdistanzmesseinheit umfasst und die Identifizierung des Zielobjekts basierend auf einer mit der Absolutdistanzmesseinheit gemessenen Entfernung zum Zielobjekt erfolgt.

3. Koordinatenmessgerät (100,100',100'',100''') nach Anspruch 1 oder 2,
**dadurch gekennzeichnet, dass**
der Intensitätsdetektor in mindestens einer der folgenden Funktionen verwendet wird
• als Empfänger der Entfernungsmessfunktionalität (106), insbesondere wobei der Intensitätsdetektor im Rahmen von mindestens einer der folgenden Entfernungsmess-Einheiten verwendet wird,
∘ einer Einheit zur Laufzeitmessung,
∘ einer Interferometer-Einheit,
∘ einer WFD-Einheit,
∘ einer FMCW-Einheit,
∘ einer Frequency-Comb-Einheit,
∘ einer Phasendistanzmess-Einheit, und
∘ einer Fizeau-Absolutdistanzmesseinheit,
• als Trackingdetektor (110) der Zielverfolgungsfunktionalität, insbesondere ausgebildet als positionssensitiver Detektor (PSD),
• als Zielerfassungsdetektor (7) einer Zielerfassungsfunktionalität des Koordinatenmessgeräts zur Ausrichtung des Messstrahls (103) auf das Zielobjekt,
• als Zielerfassungsdetektor einer Stereo-Zielerfassungsfunktionalität des Koordinatenmessgeräts zur Ausrichtung des Messstrahls (103) auf das Zielobjekt und zur Bestimmung einer Distanz zum Zielobjekt.

4. Koordinatenmessgerät (100,100',100'',100''') nach einem der Ansprüche Anspruch 1 bis 3,
**dadurch gekennzeichnet, dass**
der Flächendetektor in mindestens einer der folgenden Funktionen verwendet wird
• als Trackingdetektor (110) der Zielverfolgungsfunktionalität, insbesondere ausgebildet als positionssensitive CCD- oder CMOS-Kamera,
• als Zielerfassungsdetektor (7) einer Zielerfassungsfunktionalität des Koordinatenmessgeräts zur Ausrichtung des Messstrahls (103) auf das Zielobjekt,
• als Zielerfassungsdetektor einer Stereo-Zielerfassungsfunktionalität des Koordinatenmessgeräts zur Ausrichtung des Messstrahls (103) auf das Zielobjekt und zur Bestimmung einer Distanz zum Zielobjekt,
• als Kamera (9) zur Bereitstellung eines Übersichts-Bildes für einen Benutzer.

5. Koordinatenmessgerät (100, 100',100'',100'''), insbesondere Lasertracker, zum Erfassen einer Position eines im Raum bewegbaren, einen Retroreflektor (3) aufweisenden Zielobjekts (104,104A,104B,104C), wobei das Koordinatenmessgerät mindestens aufweist
• eine Strahlungsquelle (101,101') zur Emission eines optischen Messstrahls (103), wobei der Messstrahl mittels einer Strahllenkeinheit (16,16',16'',16''') in eine definierte Raumrichtung emittiert wird und dadurch eine Zielachse (11) definiert,
• eine Entfernungsmessfunktionalität (106) zur Bestimmung einer Distanz zum Zielobjekt mittels des Messstrahls (103),
• eine Winkelmessfunktionalität zur Bestimmung einer Emissionsrichtung des Messstrahls (103),
• eine Zielverfolgungsfunktionalität zur fortlaufenden Verfolgung des Zielobjekts, und
• eine Auswerte- und Steuereinheit (107) zur Datenspeicherung und Steuerung des Koordinatenmessgeräts,
**dadurch gekennzeichnet, dass**
das Koordinatenmessgerät umfasst
• Beleuchtungsmittel (109,109A,109B,109C,109D) zur Beleuchtung des Zielobjekts mit einer Identifikationsstrahlung in einem definierten Wellenlängenbereich, insbesondere ausgebildet als LED,
• eine Kamera (108) welche mindestens für einen Teilbereich des Wellenlängenbereichs der Identifikationsstrahlung empfindlich ist, insbesondere basierend auf einem CCD- oder CMOS-Sensor, und
• eine Zielobjekt-Datenbasis, gespeichert auf der Auswerte- und Steuereinheit, welche Informationen für einen Satz von einzelnen Zielobjekten bereitstellt, mindestens umfassend
∘ jeweils den einzelnen Zielobjekten zugeordnete Spezifikationen,
∘ jeweils den einzelnen Zielobjekten zugeordnete Positionen oder Ablagen zur Zielachse (11) in einer Aufnahme durch die Kamera des einzelnen mit den Beleuchtungsmitteln angestrahlten Zielobjekts, abhängig von
▪ einer Distanz zwischen dem Koordinatenmessgerät und dem einzelnen Zielobjekt,
▪ einem lateralen Durchmesser des Retroreflektors (3) des einzelnen Zielobjekts, und
▪ einem lateralen Abstand zwischen einer optischen Achse der Beleuchtungsmittel und einer optischen Achse der Kamera,
wobei im Rahmen einer Identifikationsfunktionalität des Koordinatenmessgeräts für das zu identifizierende Zielobjekt das Zielobjekt bezüglich der Zielachse (11) erfasst wird und automatisch gesteuert durch die Auswerte- und Steuereinheit
• mittels der Entfernungsmessfunktionalität eine Bestimmung einer Distanz zwischen dem Koordinatenmessgerät und dem Zielobjekt erfolgt,
• eine Bestimmung einer Position des Zielobjekts in einer mit der Kamera erfassten Aufnahme des mit der Identifikationsstrahlung angestrahlten Zielobjekts erfolgt,
• eine automatische Identifizierung des Zielobjekts erfolgt, basierend auf der bestimmten Distanz und der bestimmten Position des Zielobjekts in der Aufnahme durch die Kamera, und
• eine Zuordnung der zugehörigen Spezifikationen zum Zielobjekt erfolgt, basierend auf den durch die Zielobjekt-Datenbasis bereitgestellten Informationen.

6. Koordinatenmessgerät (100,100',100'',100''') nach Anspruch 5,
**dadurch gekennzeichnet, dass**
• die Beleuchtungsmittel (109,109A,109B,109C,109D) ausgestaltet sind als mehrere einzelne Lichtquellen, insbesondere als LED, welche an den Seiten der Eintrittsoptik der Kamera (108) angebracht sind, wobei die optischen Achsen der einzelnen Lichtquellen jeweils einen unterschiedlichen lateralen Abstand zur optischen Achse der Kamera aufweisen, insbesondere wobei die einzelnen Lichtquellen Strahlung in definierten voneinander unterschiedlichen Wellenlängenbereichen erzeugen,
insbesondere wobei
• mindestens eine erste Lichtquelle der Beleuchtungsmittel (109,109A,109B,109C,109D) auch als Anzielbeleuchtungsmittel für eine Zielerfassungsfunktionalität des Koordinatenmessgeräts zur Ausrichtung des Messstrahls (103) auf das Zielobjekt vorgesehen ist, insbesondere wobei die erste Lichtquelle einen Teil der Identifikationsstrahlung und die Erfassungsstrahlung bereitstellt.

7. Koordinatenmessgerät (100,100',100'',100''') nach einem der Ansprüche 5 bis 6,
**dadurch gekennzeichnet, dass**
die einzelnen Lichtquellen der Beleuchtungsmittel (109,109A,109B,109C,109D) durch die Auswerte- und Steuereinheit gleichzeitig oder separat, insbesondere sequentiell, ein- und ausgeschaltet werden, wobei eine Ein- und/oder Ausschaltung der Lichtquellen zeitlich mit einer Aufnahme durch die Kamera (108) verknüpft wird.

## Claims

1. Coordinate measuring device (100, 100', 100'', 100'"), in particular a laser tracker, for detecting a position of a target object (104, 104A, 104B, 104C) which can move in space and which comprises a retroreflector (3), wherein the coordinate measuring device at least comprises
• a radiation source (101, 101') for emitting an optical measurement beam (103), wherein the measurement beam is emitted in a defined spatial direction by means of a beam directing unit (16, 16', 16", 16'") and thus defines a target axis (11),
• a distance measuring functionality (106) for determining a distance to the target object by means of the measurement beam (103),
• an angle measuring functionality for determining a direction of emission of the measurement beam (103),
• a target tracking functionality for the continuous tracking of the target object, and
• an evaluation and control unit (107) for data storage and for the control of the coordinate measuring device,
wherein the coordinate measuring device comprises a target object database which is stored in the evaluation and control unit and provides information for a set of individual target objects, at least including
• specifications assigned to each of the individual target objects, and
• values of differentiation parameters assigned to each of the individual target objects, wherein the differentiation parameters comprise
o a parameter which stands for a total retroreflective capability of a target object, in particular a ratio of radiation incident on the target object with respect to the portion of the incident radiation which has been retroreflected on the particular target object, and
∘ a parameter which stands for an aperture size of the retroreflector of a target object, in particular a diameter or an area of an image of the retroreflector of the particular target object captured with the aid of an area detector from a defined distance,
wherein, within the scope of an identification functionality of the coordinate measuring device automatically controlled by the evaluation and control unit for a target object to be identified,
• a value of the intensity signal of the target object registered with the aid of an intensity detector (7, 9, 106, 108, 110), and
• a diameter or an area of an image of the target object captured with the aid of an area detector (7, 9, 108, 110)
are determined,
**characterized in that**
• an automatic identification of the target object takes place based on the determined value of the intensity signal and the diameter or the area of the captured image of the target object, wherein, for the purpose of the identification, the value of the intensity signal and the diameter or the area of the captured image of the target object are set into relation to a distance to the target object determined with the aid of the distance measuring functionality, and
• an allocation of the assigned specifications to the target object takes place based on the information provided by the target object database.

2. Coordinate measuring device (100, 100', 100'', 100'") according to Claim 1,
**characterized in that**
the distance measuring functionality comprises an absolute distance measuring unit and the identification of the target object takes place based on a distance to the target object measured with the aid of the absolute distance measuring unit.

3. Coordinate measuring device (100, 100', 100'', 100'") according to Claim 1 or 2,
**characterized in that**
the intensity detector is used in at least one of the following functions
• as a receiver of the distance measuring functionality (106), in particular wherein the intensity detector is used within the scope of at least one of the following distance measuring units,
∘ a unit for measuring propagation time,
∘ an interferometer unit,
∘ a WFD unit,
∘ a FMCW unit,
∘ a frequency comb unit,
∘ a phase distance measuring unit, and
∘ a Fizeau absolute distance measuring unit,
• as a tracking detector (110) of the target tracking functionality, in particular being configured as a position-sensitive detector (PSD),
• as a target recognition detector (7) of a target recognition functionality of the coordinate measuring device for orienting the measurement beam (103) toward the target object,
• as a target recognition detector of a stereo target recognition functionality of the coordinate measuring device for orienting the measurement beam (103) onto the target object and for determining a distance to the target object.

4. Coordinate measuring device (100, 100', 100'', 100'") according to any one of Claims 1 to 3,
**characterized in that**
the area detector is used in at least one of the following functions
• as a tracking detector (110) of the target tracking functionality, in particular being configured as a position-sensitive CCD- or CMOS-camera,
• as a target recognition detector (7) of a target recognition functionality of the coordinate measuring device for orienting the measurement beam (103) onto the target object,
• as a target recognition detector of a stereo target recognition functionality of the coordinate measuring device for orienting the measurement beam (103) onto the target object and for determining a distance to the target object,
• as a camera (9) for providing an overview image for a user.

5. Coordinate measuring device (100, 100', 100", 100'''), in particular a laser tracker, for detecting a position of a target object (104, 104A, 104B, 104C) which can move in space and which comprises a retroreflector (3), wherein the coordinate measuring device at least comprises
• a radiation source (101, 101') for emitting an optical measurement beam (103), wherein the measurement beam is emitted in a defined spatial direction by means of a beam directing unit (16, 16', 16", 16'") and thus defines a target axis (11),
• a distance measuring functionality (106) for determining a distance to the target object by means of the measurement beam (103),
• an angle measuring functionality for determining a direction of emission of the measurement beam (103),
• a target tracking functionality for the continuous tracking of the target object, and
• an evaluation and control unit (107) for data storage and for the control of the coordinate measuring device,
**characterized in that**
the coordinate measuring device comprises
• illumination means (109, 109A, 109B, 109C, 109D) for illuminating the target object with an identification radiation in a defined wavelength range, in particular being configured as an LED,
• a camera (108) which is sensitive at least to a portion of the wavelength range of the identification radiation, in particular based on a CCD- or CMOS-sensor, and
• a target object database which is stored in the evaluation and control unit and provides information for a set of individual target objects, at least including
∘ specifications assigned to each of the individual target objects,
∘ positions assigned to the individual target objects or deviations from the target axis (11) in an image captured by the camera of the individual target object irradiated with the illumination means, depending on .
• a distance between the coordinate measuring device and the individual object,
▪ a lateral diameter of the retroreflector (3) of the individual target object, and
▪ a lateral distance between an optical axis of the illumination means and an optical axis of the camera,
wherein, within the scope of an identification functionality of the coordinate measuring device for the target object to be identified, the target object is detected with respect to the target axis (11) and, automatically controlled by the evaluation and control unit,
• a determination of a distance between the coordinate measuring device and the target object takes place by means of the distance measuring functionality,
• a determination of a position of the target object takes place in an image - captured with the aid of the camera - of the target object irradiated with the identification radiation,
• an automatic identification of the target object takes place based on the determined distance and the determined position of the target object in the image captured by the camera, and
• an allocation of the assigned specifications to the target object takes place based on the information provided by the target object database.

6. Coordinate measuring device (100, 100', 100'', 100'") according to Claim 5,
**characterized in that**
• the illumination means (109, 109A, 109B, 109C, 109D) are configured as multiple individual light sources, in particular as LEDs, which are mounted on the sides of the entrance optical system of the camera (108), wherein the optical axes of the individual light sources each have different lateral spacing from the optical axis of the camera, in particular wherein the individual light sources generate radiation in defined wavelength ranges which differ from each other, in particular wherein
• at least one first light source of the illumination means (109, 109A, 109B, 109C, 109D) is also provided as sighting illumination means for a target recognition functionality of the coordinate measuring device for orienting the measurement beam (103) toward the target object, in particular wherein the first light source provides a portion of the identification radiation and the recognition radiation.

7. Coordinate measuring device (100, 100', 100", 100''') according to any one of Claims 5 to 6,
**characterized in that**
the individual light sources of the illumination means (109, 109A, 109B, 109C, 109D) can be switched on and off by the evaluation and control unit simultaneously or separately, in particular sequentially, wherein a switching on and/or off of the light sources is temporally linked to an image-capturing by means of the camera (108).

## Revendications

1. Appareil de mesure de coordonnées (100, 100', 100", 100'''), en particulier poursuite laser, pour saisir une position d'un objet cible (104, 104A, 104B, 104C) mobile dans l'espace et comportant un rétroréflecteur (3), dans lequel l'appareil de mesure de coordonnées comporte au moins
• une source de rayonnement (101, 101') pour émettre un faisceau de mesure optique (103), dans lequel le faisceau de mesure est émis dans une direction spatiale définie au moyen d'une unité de déviation de faisceau (16, 16', 16", 16''') et définit ainsi un axe cible (11),
• une fonctionnalité de télémétrie pour déterminer une distance jusqu'à l'objet cible au moyen du faisceau de mesure (103),
• une fonctionnalité de mesure d'angle pour déterminer une direction d'émission du faisceau de mesure (103),
• une fonctionnalité de suivi de cible pour le suivi en continu de l'objet cible, et
• une unité de contrôle et de commande (107) pour la mémorisation des données et la commande de l'appareil de mesure de coordonnées,
dans lequel l'appareil de mesure de coordonnées comporte une base de données d'objets cibles, mémorisée sur l'unité de contrôle et de commande, laquelle fournit des informations pour une série d'objets cibles particuliers, comprenant au moins
• des spécifications respectivement associées aux objets cibles particuliers, et
• des valeurs de paramètres de différenciation respectivement associées aux objets cibles particuliers, dans lequel les paramètres de différenciation comprennent
o un paramètre qui représente un pouvoir rétroréfléchissant total d'un objet cible, en particulier une proportion de rayonnement incident sur l'objet cible par rapport à la fraction du rayonnement incident rétroréfléchie sur l'objet cible respectif, et
o un paramètre qui représente une grandeur d'ouverture du rétroréflecteur d'un objet cible, en particulier un diamètre ou une surface d'une capture saisie avec un détecteur plan du rétroréflecteur de l'objet cible respectif depuis une distance définie,
dans lequel, dans le cadre d'une fonctionnalité d'identification de l'appareil de mesure de coordonnées, sont saisis, de manière automatiquement commandée par l'unité de contrôle et de commande, pour un objet cible à identifier,
• une valeur du signal d'intensité du l'objet cible saisie avec un détecteur d'intensité (7, 9, 106, 108, 110), et
• un diamètre ou une surface d'une capture de l'objet cible saisie avec un détecteur plan (7, 9, 108, 110),
**caractérisé en ce que**
• une identification automatique de l'objet cible s'effectue, basée sur la valeur déterminée du signal d'intensité et le diamètre ou la surface de la capture saisie de l'objet cible, dans lequel pour l'identification la valeur du signal d'intensité et du diamètre ou de la surface de la capture saisie de l'objet cible sont mises en relation avec une distance par rapport à l'objet cible déterminée avec la fonctionnalité de télémétrie, et
• une affectation à l'objet cible des spécifications associées s'effectue en se basant sur les informations fournies par la base de données d'objets cibles.

2. Appareil de mesure de coordonnées (100, 100', 100", 100''') selon la revendication 1,
**caractérisé en ce que**
la fonctionnalité de télémétrie comprend une unité de mesure de distance absolue et l'identification de l'objet cible s'effectue en se basant sur un éloignement par rapport à l'objet cible mesuré avec l'unité de mesure de distance absolue.

3. Appareil de mesure de coordonnées (100, 100', 100", 100''') selon la revendication 1 ou 2,
**caractérisé en ce que**
le détecteur d'intensité est utilisé dans au moins une des fonctions suivantes
• en tant que récepteur de la fonctionnalité de télémétrie (106), en particulier dans lequel le détecteur d'intensité est utilisé dans le cadre d'au moins une des unités de télémétrie suivantes,
o d'une unité de mesure de temps de parcours,
o d'une unité d'interféromètre,
o d'une unité WFD,
o d'une unité FMCW,
o d'une unité de peigne de fréquences,
o d'une unité de télémétrie par mesure de déphasage,
o d'une unité de mesure de distance absolue Fizeau,
• en tant que détecteur de poursuite (110) de la fonctionnalité de suivi de cible, en particulier réalisé en tant que détecteur sensible à la position (PSD),
• en tant que détecteur de saisie de cible (7) d'une fonctionnalité de saisie de cible de l'appareil de mesure de coordonnées destiné à orienter le faisceau de mesure (103) sur l'objet cible,
• en tant que détecteur de saisie de cible d'une fonctionnalité de saisie stéréoscopique de cible de l'appareil de mesure de coordonnées destiné à orienter le faisceau de mesure (103) sur l'objet cible et à déterminer une distance jusqu'à l'objet cible.

4. Appareil de mesure de coordonnées (100, 100', 100", 100''') selon l'une des revendication 1 à 3,
**caractérisé en ce que**
le détecteur plan est utilisé dans au moins une des fonctions suivantes
• en tant que détecteur de poursuite (110) de la fonctionnalité de suivi de cible, en particulier réalisé en tant que caméra CCD ou CMOS sensible à la position,
• en tant que détecteur de saisie de cible (7) d'une fonctionnalité de saisie de cible de l'appareil de mesure de coordonnées destiné à orienter le faisceau de mesure (103) sur l'objet cible,
• en tant que détecteur de saisie de cible d'une fonctionnalité de saisie stéréoscopique de cible de l'appareil de mesure de coordonnées destiné à orienter le faisceau de mesure (103) sur l'objet cible et à déterminer une distance jusqu'à l'objet cible,
• en tant que caméra (9) pour fournir une image d'aperçu pour un utilisateur.

5. Appareil de mesure de coordonnées (100, 100', 100", 100'''), en particulier poursuite laser, pour saisir une position d'un objet cible (104, 104A, 104B, 104C) mobile dans l'espace et comportant un rétroréflecteur (3), dans lequel l'appareil de mesure de coordonnées comporte au moins
• une source de rayonnement (101, 101') pour émettre un faisceau de mesure optique (103), dans lequel le faisceau de mesure est émis dans une direction spatiale définie au moyen d'une unité de déviation de faisceau (16, 16', 16", 16''') et définit ainsi un axe cible (11),
• une fonctionnalité de télémétrie (106) pour déterminer une distance jusqu'à l'objet cible au moyen du faisceau de mesure (103),
• une fonctionnalité de mesure d'angle pour déterminer une direction d'émission du faisceau de mesure (103),
• une fonctionnalité de suivi de cible pour le suivi en continu de l'objet cible, et
• une unité de contrôle et de commande (107) pour la mémorisation des données et la commande de l'appareil de mesure de coordonnées,
**caractérisé en ce que** l'appareil de mesure de coordonnées comprend
• des moyens d'éclairage (109, 109A, 109B, 109C, 109D) destinés à éclairer l'objet cible avec un rayonnement d'identification dans une plage de longueurs d'onde définie, en particulier réalisés en tant que LED,
• une caméra (108), laquelle est sensible au moins pour une partie de la plage de longueurs d'onde du rayonnement d'identification, en particulier basée sur un capteur CCD ou CMOS, et
• une base de données d'objets cibles, mémorisée sur l'unité de contrôle et de commande, laquelle fournit des informations pour une série d'objets cibles particuliers, comprenant au moins
o des spécifications respectivement associées aux objets cibles particuliers,
o des positions ou des gisements par rapport à l'axe cible (11) respectivement associés aux objets cibles particuliers dans une capture par la caméra de l'objet cible particulier irradié avec les moyens d'éclairage, en fonction
▪ d'une distance entre l'appareil de mesure de coordonnées et l'objet cible particulier,
▪ d'un diamètre latéral du rétroréflecteur (3) de l'objet cible particulier, et
▪ d'un écart latéral entre l'axe optique des moyens d'éclairage et un axe optique de la caméra,
dans lequel, dans le cadre d'une fonctionnalité d'identification de l'appareil de mesure de coordonnées pour l'objet cible à identifier, l'objet cible est saisi par rapport à l'axe cible (11) et, de manière commandée automatiquement par l'unité de contrôle et de commande
• au moyen de la fonctionnalité de télémétrie une détermination d'une distance entre l'appareil de mesure de coordonnées et l'objet cible s'effectue,
• une détermination d'une position de l'objet cible s'effectue dans une capture, saisie avec la caméra, de l'objet cible éclairé avec le rayonnement d'identification,
• une identification automatique de l'objet cible s'effectue, basée sur la distance déterminée et sur la position déterminée de l'objet cible dans la capture par la caméra, et
• une affectation à l'objet cible des spécifications associées s'effectue, en se basant sur les informations fournies par la base de données d'objets cibles.

6. Appareil de mesure de coordonnées (100, 100', 100", 100''') selon la revendication 5,
**caractérisé en ce que**
• les moyens d'éclairage (109, 109A, 109B, 109C, 109D) sont configurés comme plusieurs sources lumineuses individuelles, en particulier comme LED, lesquelles sont disposées sur les côtés de l'optique d'entrée de la caméra (108), dans lequel les axes optiques des sources lumineuses individuelles comportent respectivement un écart latéral différent par rapport à l'axe optique de la caméra, en particulier dans lequel les sources lumineuses individuelles produisent un rayonnement dans des plages de longueurs d'onde définies différentes l'une de l'autre,
en particulier dans lequel
• au moins une première source lumineuse des moyens d'éclairage (109, 109A, 109B, 109C, 109D) est également prévue comme moyen d'éclairage de ciblage pour une fonctionnalité de saisie de cible de l'appareil de mesure de coordonnées destinée à orienter le faisceau de mesure (103) sur l'objet cible,
en particulier dans lequel la première source lumineuse fournit une partie du rayonnement d'identification et du rayonnement de saisie.

7. Appareil de mesure de coordonnées (100, 100', 100", 100''') selon l'une des revendication 5 à 6,
**caractérisé en ce que**
les sources lumineuses individuelles des moyens d'éclairage (109, 109A, 109B, 109C, 109D) sont allumées et éteintes simultanément ou séparément, en particulier séquentiellement, par l'unité de contrôle et de commande, dans lequel un allumage et/ou extinction des sources lumineuses est combiné chronologiquement avec une capture par la caméra (108) .
